# EUROPEAN PATENT APPLICATION

(11) **EP 1 361 097 A1**
(43) Date of publication of application: **12.11.2003**
(21) Application number: 02447084.1
(22) Date of filing: 07.05.2002
(51) Int. Cl.: B60J 10/02, B60J 10/00

(54) **Method for adhering an edge seal to an edge of a window panel**

(71) Applicant: RECTICEL, 1200 Brussels (BE)
(72) Inventor: The designation of the inventor has not yet been filed
(74) Representative: Van Reet, Joseph

(57) **Abstract**

In the method a base portion (7) of the seal (1) is adhered by means of a double sided pressure sensitive adhesive tape (2) applied on the top surface of the base portion (7) to the inside surface (4) of the window panel (3) whilst a gap filling portion (8) of the seal, which projects above the top surface of the base portion (7) and which is at least partially resiliently compressible, is kept in engagement with the lateral side (6) of the edge of the window panel (3). For adhering the edge seal (1) to the window panel, the seal is immobilised on a first jaw (21) of a clamp (22), the edge of the window panel and the gap filling portion (8) of the seal are then brought into lateral engagement with one another, after which the inside surface (4) of the window panel and the double sided pressure sensitive adhesive tape (2) are brought into engagement with one another according to a movement direction substantially perpendicular to the top surface of the base portion (7). The seal can thus be adhered in the correct position to the window panel.

## Description

The present invention relates to a method for adhering an edge seal to an edge of a window panel, in particular an automotive vehicle's window panel, which edge has a predetermined contour and which window panel has an inside and an outside surface, the edge seal comprising at least a base portion, which has a top surface arranged to be adhered along said edge to the inside surface of the window panel, and a gap filling portion which is at least partially resiliently compressible, which projects above the top surface of the base portion and which shows a further top surface, in which method the base portion of the seal is adhered by means of a double sided pressure sensitive adhesive tape applied on said top surface to the inside surface of the window panel with the gap filling portion kept in engagement with the lateral side of the edge of the window panel, the top surface of the gap filling portion being usually substantially flush with the outside surface of the window panel.

A window panel, in particular a windshield of an automotive vehicle, provided with an edge seal in accordance with a method as set forth hereabove is disclosed in WO 01/85481. The edge seal disclosed in this international patent application has a rigid, in cross-section generally hook shaped portion providing a groove wherein a water casing cover ("Wasserkasten-Abdeckung") can be fixed by means of a rib provided on the back of this cover. The rigid portion forms a base portion which is adhered to the inside surface of a windshield along the lower edge thereof. On top of the rigid base portion, a soft sealing lip, forming a gap filling portion, is provided which engages both the lower edge of the wind shield and the upper edge of the water casing cover without leaving any gap. The sealing lip has a top surface which is substantially flush to the outside surface of the windshield. This top surface has a relatively small width.

For adhering the edge seal to the windshield WO 01/85481 discloses the use of a double sided adhesive tape between the base portion of the edge seal and the inside surface of the window panel. An advantage of the use of such an adhesive tape is that the seal adheres immediately to the window panel so that the production speed can be increased compared to a process wherein use is made of a glue which has to set before both elements are adhered to one another. A problem with the use of a double sided pressure sensitive tape is however that when both elements contact one another, the adhesive tape does not allow a mutual sliding of these elements so that it isn't easy to fix both elements in the right position to one another.

WO 01/85481 does not disclose any details about the way wherein the edge seal is adhered to the window panel. According to the present invention, it has however been found that it is not easy to adhere the edge seal by means of the pressure sensitive double sided tape correctly to the window panel. It appeared for example that when adhering the edge seal manually to the window panel local gaps were often produced between the seal and the edge of the window panel whilst in other locations the seal was compressed or deformed too strongly. It is clear that gaps between the window panel and the seal are to be avoided in view of an ineffective sealing which is then obtained. Gaps and non-uniform deformations of the gap filling portion are further to be avoided from an aesthetic point of view, especially when the gap filling portion has a relatively small width, for example a width of about 2 mm, since even small variations of this width are then already eye-catching. For a nicely finished, highly qualitative product, no gaps should therefore be present and, apart from the tolerance differences of the window panel, the gap filling portion of the edge seal should be deformed in a quite uniform way.

US-A-5 603 546 discloses a method wherein a seal is adhered by means of a double sided pressure sensitive tape to the inside surface of a window panel. In this known method, the seal is arranged onto a support and the window panel is lowered for example by means of a robot vertically onto the seal. In this method the seal does however not engage the lateral side of the window panel when being adhered thereto but only when the window assembly is mounted in a car body. In this way, the window panel can simply be lowered and pressed onto the double sided adhesive tape. When the gap filling portion of the seal immediately laterally engages the edge of the window panel as in the method according to the present invention, the method disclosed in US-A-5 603 546 cannot be used to adhere the seal to the window panel.

An object of the present invention is therefore to provide a new method which enables to adhere an edge seal correctly with its gap filling portion in lateral engagement with the edge of the window panel to this panel without leaving gaps between seal and the edge of the window panel and without non-uniform local deformations of the gap filling portion of the seal which are larger than the tolerance differences of the edge of the window panel.

In order to achieve this goal, the method according to the invention is characterised in that for adhering the edge seal to the window panel, the seal is immobilised according to said predetermined contour on a first jaw of a clamp, the edge of the window panel and the gap filling portion of the seal are then brought into lateral engagement with one another so that the gap filling portion is at least partially deformed, a predetermined clearance being maintained between the inside surface of the window panel and the double sided pressure sensitive adhesive tape applied onto the top surface of said base portion when bringing the edge of the window panel and the gap filling portion of the seal into lateral engagement with one another, the inside surface of the window panel and the double sided pressure sensitive adhesive tape are subsequently brought into engagement with one another according to a movement direction substantially perpendicular to the top surface of the base portion, and the window panel and the base portion of the edge seal are pressed with a predetermined pressure onto one another.

By bringing the edge of the window panel first on a predetermined distance above the double sided adhesive tape in engagement with the gap filling portion of the seal so that this gap filling portion is at least partially deformed, the window panel can be positioned correctly above the double sided adhesive tape. When the window panel is subsequently lowered in a direction substantially perpendicular to the top surface of the base portion, it will be fixed in the correct position onto the seal.

In a preferred embodiment of the method according to the invention, the edge of the window panel and the gap filling portion of the seal are brought into lateral engagement with one another according to a movement direction which is substantially parallel to the top surface of the base portion.

In this embodiment any contact of the window panel with the double sided adhesive tape during the lateral movement can be avoided easily. When bringing the edge of the window panel and the gap filling portion of the seal into lateral engagement with one another a clearance of at least 0.5 mm, in particular of at least 1 mm, is preferably maintained between the inside surface of the window panel and the double sided pressure sensitive adhesive tape applied onto the top surface of the base portion. In this way, there will be no contact between the inside surface of the window panel and the double sided adhesive tape whilst the edge of the window panel can be efficiently stopped by the gap filling portion of the edge seal.

In a further preferred embodiment of the method according to the invention, the edge seal is made at least of a first material and of a second material which is softer than the first material, the gap filling portion of the edge seal having a structural portion made of the first material and a sealing portion made of the second material and arranged to abut against the edge of the window panel, the structural portion of the gap filling portion being used to stop the mutual movement of the window panel and the edge seal when bringing the edge of the window panel and the gap filling portion of the seal into lateral engagement with one another.

In this embodiment, a correct positioning of the window panel above the base portion of the seal can simple be achieved by abutting the edge of window panel against the gap filling portion of the seal.

Preferably, the edge of the window panel and the gap filling portion of the seal are brought substantially simultaneously over the entire length of the gap filling portion into lateral engagement with one another. The inside surface of the window panel and the double sided pressure sensitive adhesive tape are also preferably brought substantially simultaneously over the entire length of the double sided pressure sensitive adhesive tape into engagement with one another. In this way, too strong local deformations are easier to avoid.

Further particularities and advantages of the invention will become apparent from the following description of a particular embodiment of the method according to the present invention. This description is however only given by way of illustrative example and is not intended to limit the scope of the invention. The reference numerals indicated in this description refer to the annexed figures wherein:
Figure 1 shows a cross-sectional view of a possible edge seal, corresponding to the seal shown in Figure 5 of WO 01/85481, which can be adhered to the edge of a window panel in accordance with the method according to the invention;
Figures 2 a-f illustrate schematically the different steps of a preferred embodiment of the method according to the invention; and
Figures 3 to 8 illustrate each of these steps on a larger scale.

In the method according to the invention an edge seal 1 is adhered by means of a double sided pressure sensitive adhesive tape 2 to an edge of a window panel 3, in particular to a window panel for an automotive vehicle such as the windshield or the back or side windows. The double sided adhesive tape 2 is for example an acrylic foam tape such as the VHB Acrylic Foam Tape of 3M.

The window panel 3 is in particular made of laminated or tempered glass which has an inside surface 4 and an outside surface 5. These surfaces are normally three-dimensionally shaped. The lateral side 6 of the window panel 3 extends usually at right angles to the inside and outside surface but it is also possible that the lateral side is not perpendicular but instead somewhat inclined. The window panel 3 has a predetermined contour which may differ only with predetermined part tolerances from its nominal contour. In practice these tolerances are usually the result of grinding waves which are the waves on the edge of the glass created by the tolerances on the grinding equipment. The tolerance for these grinding waves is for example set at ± 0.5/400 mm, i.e. over an edge length of 400 mm, the real side edge contour may only differ from - 0.5 mm to + 0.5 mm from the nominal edge contour.

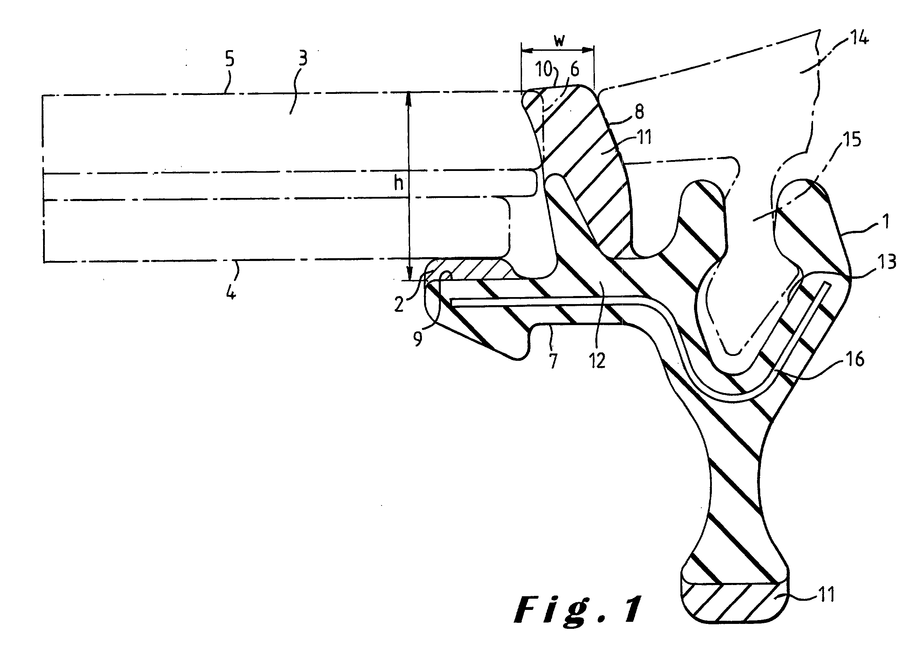

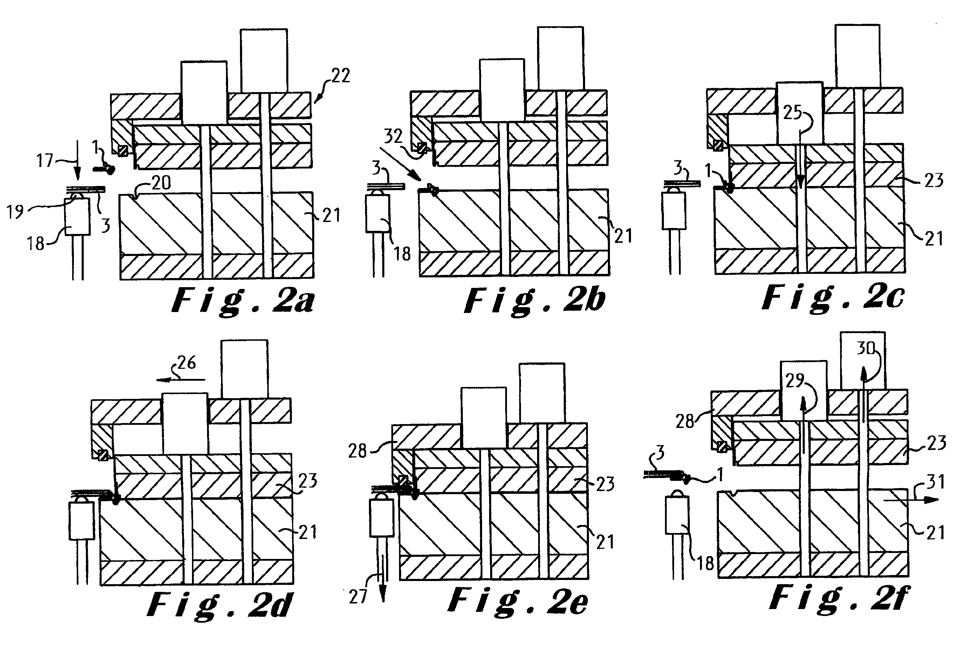

As can clearly be seen in Figure 1, the edge seal 1 applied in the method according to the present invention forms a two-sided encapsulation around the edge of the window panel 3. It comprises at least a base portion 7 and a gap filling portion 8. The base portion 7 has a top surface 9 onto which the double sided adhesive tape 2 is applied for adhering the edge seal 1 with the top surface 9 of the base portion 7 to the inside surface 4 of the window panel 3. In the top surface 9 of the base portion 7 a recess may be provided for receiving the double sided adhesive tape 2 as illustrated for example in Figure 2 of WO 01/85481. The gap filling portion 8 shows a further top surface 10 and projects above the top surface 9 of the base portion 7. The gap filling portion 8 is arranged to engage the lateral side 6 of the window panel 3 and to fill the gap between the window panel and the opening in the frame or panel wherein this window panel is to be mounted or the gap between the window panel and any plate like element, such as the water casing cover fixed to the edge seal applied onto the lower edge of an automotive vehicle's windshield. For aesthetic reasons, the top surface 10 of the gap filling portion 8 has usually a width w smaller than 5 mm, preferably smaller than 3 mm. The gap filling portion 8 has further preferably such a height h that its top surface 10 is substantially flush with the outside surface 5 of the window panel 3. The gap filling portion 8 may be made entirely of a resiliently compressible material 11 or it may be made of a more rigid material 12 and partially of a resiliently compressible material.

In the embodiment of Figure 1, the base portion 7 and part of the gap filling portion 8 are made of a more rigid material 12 such as polypropylene (PP), polyvinylchloride (PVC), acrylonitrile-butadienestyrene-copolymers (ABS) etc. or combinations thereof. The other part of the gap filling portion 8 is made of a softer material 11, which is resiliently compressible, such as thermoplastic polyethylene (TPE) or soft rubber, for example EPDM rubber. The gap filling portion 8 thus comprises a structural portion made of the more rigid material 12 and a sealing portion made of the resiliently compressible material 11. Due to the presence of such a resiliently compressible material, which abuts the edge of the window panel and of the window opening, an effective seal can be achieved between both elements. In Figure 1 the rigid material does not only form the base portion 7 underneath the window panel 3 but also a groove 13 wherein a water casing cover plate 14, which is usually provided along the bottom edge of a windshield, can be fixed by means of a rib 15 provided on its back side. In order to reinforce the rigid part of the seal, a metal insert 16 may be arranged therein, for example when the rigid part is made of rigid rubber. In the preferred embodiment, wherein the edge seal is made of rigid PP and of soft TPE, such a metal insert can however be omitted.

For other applications, for example for the rear window of an automotive vehicle, the edge seal does not need to comprise a structural part made of a rigid material but the entire seal may be made of one or more soft materials such as for example Moos EPDM.

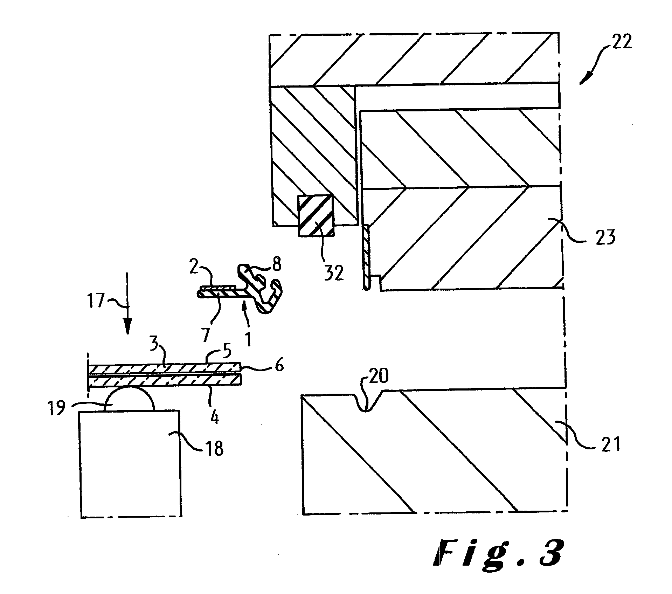

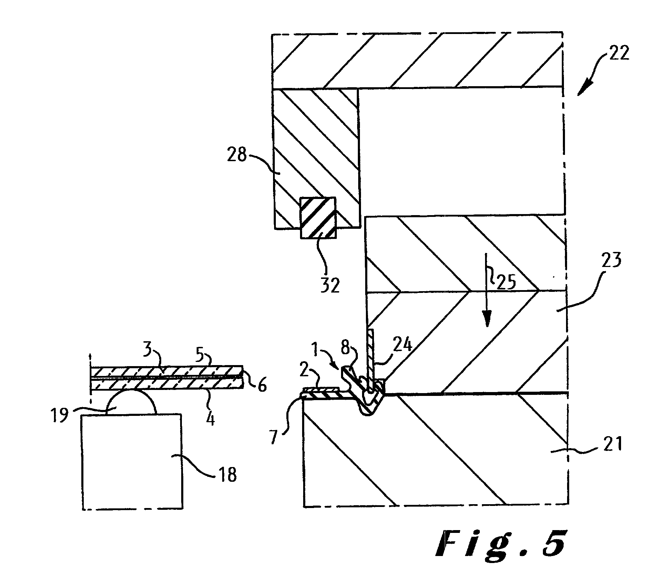

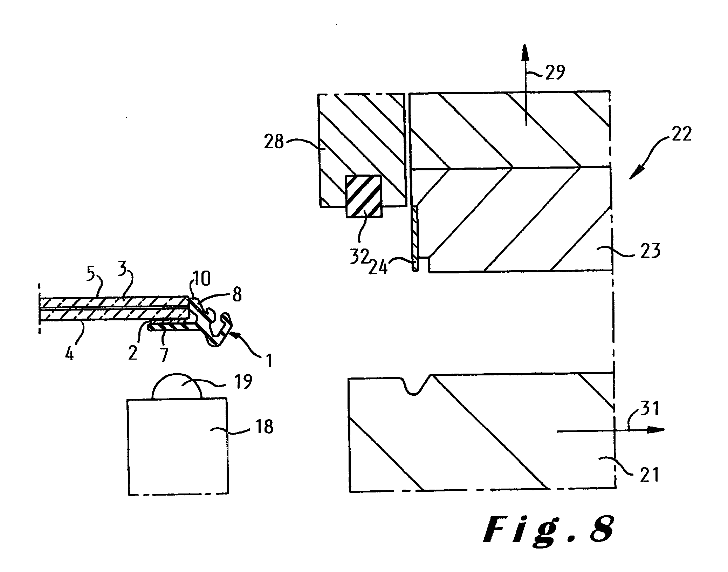

Figures 2 a-f, and on a larger scale Figures 3 to 8, illustrate a method according to the invention by means of which the edge seal shown in Figure 1 can be adhered in the correct position to the inside surface 4 of the window panel 3.

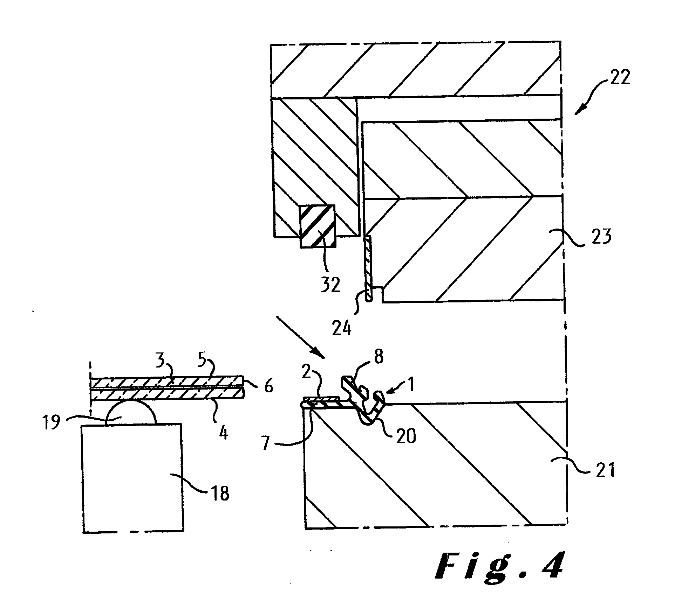

In a first step, the window panel 3 is fixed for example by means of suction cups to a non-illustrated handling device, for example a known robot arm, and is lowered, as illustrated in Figures 2a and 3, according to arrow 17 onto supports 18, provided with soft contact elements 19. As illustrated in Figures 2b and 4, the edge seal 1 is positioned partially in a recess 20 on a first jaw 21 of a clamp 22. The recess 20 is shaped in such a manner that when the seal 1 is positioned therein, it assumes or maintains substantially the nominal contour of the edge of the window panel 3.

Subsequently, the edge seal 1 is immobilised on the first jaw 21 by means of a number of second jaws 23 which are arranged next to one another along the edge seal positioned onto the first jaw. The second jaws 23 are provided with a downward projecting rib 24 which is inserted in the groove 13 of the seal when lowering the second jaws 23 according to arrow 25 onto the first jaw 21. The second jaws 23 are lowered preferably one after the other onto the first jaw 21 so that the respective portion of the edge seal can be kept for example manually into the recess 20 and the rib 24 is inserted correctly in the groove 13 without damaging the seal 1. By progressively immobilising the seal in this way, it can be immobilised easier and the risk of damaging the seal is reduced. Although the second jaws may be situated on a distance from one another, it is preferred to arrange them on a short mutual distance, for example on a distance smaller than 4 cm, so that the seal is immobilised substantially over its entire length. In this position, the protective cover strip, which has not been illustrated in the drawings, can be removed from the top of the double sided adhesive tape 2.

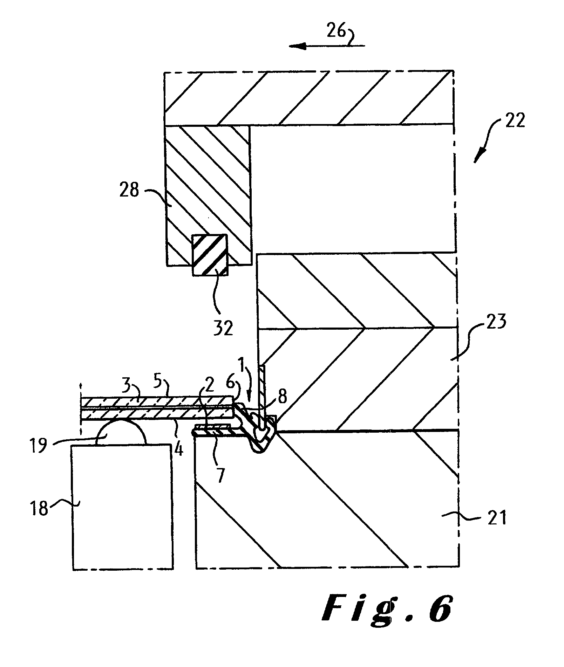

In a next step, illustrated in Figures 2d and 6, the edge of the window panel 3, more particularly the lateral side 6 thereof, is brought into lateral engagement with the gap filling portion 8 of the seal 1 so that this gap filling portion 8 is at least partially deformed. This can be done by moving the entire clamp 22 in the direction of arrow 26 towards the window panel 3 or by moving the window panel towards the clamp. During this lateral movement a clearance has to be maintained between the inside surface 4 of the window panel 3 and the top of the double sided adhesive tape 2. In this way the edge of the window panel can be positioned correctly above the adhesive tape since by the observed clearance it does not stick to this tape. The clearance maintained between the inside surface of the window panel and the top surface of the adhesive tape comprises preferably at least 0.5 mm, and most preferably at least 1 mm. Depending on the height h of the gap filling portion, this clearance is preferably smaller than 3 mm, and more preferably smaller than 2 mm and most preferably smaller than 1.5 mm.

In order to make it easier to observe the above mentioned minimum and maximum clearances, especially when the surface of the window panel is three-dimensionally shaped, the window panel is brought into lateral engagement with the gap filling portion 8 of the seal 1 according to a movement direction 26 which is substantially parallel to the top surface 9 of the base portion 7. The movement direction 26 is further preferably chosen in such a manner that the window panel is brought substantially simultaneously over the entire length of the gap filling portion 8 of the seal 1 into lateral engagement with this portion 8. The gap filling portion 8 is hereby preferably substantially uniformly deformed, except for the above-described tolerances of the contour of the window panel. Most preferably, deformation of the gap filling portion by the engagement with the edge of the window panel is kept to a minimum, the gap filling portion being compressed more particularly less than 1.5 mm, and preferably less than 1 mm.

When the gap filling portion 8, or the entire seal 1, is made of a soft material a control unit may be needed to position the edge of the window panel correctly above the base portion. When the gap filling portion 8 comprises however a structural portion made of a more rigid material 12, this structural portion can be used to stop the mutual lateral movement of the window panel 3 and the edge seal 1. In this case, the window panel and the edge seal have to be urged with a minimum force to one another, which minimum force is large enough to partially deform the sealing portion so that no gaps remain between the gap filling portion and the lateral side 6 of the window panel 3 as a result of the part tolerances but which minimum force is smaller than the force required to deform the structural portion.

In the preferred embodiment illustrated in the drawings, the seal immobilising means, more particularly the ribs 24 on the second jaws 23 engage the edge seal 1 at least in one location situated above the plane defined by the inside surface 4 of the window panel 3 when this panel is adhered to the double sided adhesive tape 2. Such an arrangement offers first of all the advantage that the edge seal 1 is prevented from rotating clockwise according to the view of the drawings or in other words the base portion 7 and the double sided adhesive tape 2 adhered on the top surface 9 thereof is prevented from being lifted with respect to the first jaw 21 of the clamp 22 so that the clearance between the inside surface of the window panel and the top of the adhesive tape can be kept to a minimum. A further advantage is that the ribs 24 on the second jaws 23 prevent the seal from being pushed out of the recess or from being damaged by the pressure exerted thereon by the window panel.

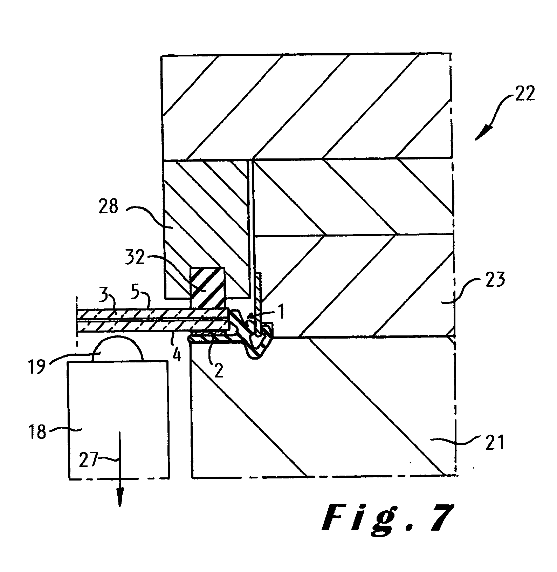

Once the window panel has been brought into lateral engagement with the gap filling portion, the window panel can be lowered onto the adhesive tape 2 or the seal can be raised so that adhesive tape 2 and the inside surface 4 of the window panel 3 are brought into engagement with one another. This mutual movement is performed in a direction 27 which is substantially perpendicular to the top surface of the base portion or to the inside surface of the window panel. When the surface of the window panel, or the base portion of the seal, is three-dimensionally curved an average flat plane passing through the top surface of the base portion has first to be determined and the movement direction 27 is then substantially perpendicular to this average flat plane. In Figure 7 the window panel 3 is lowered onto the seal by lowering the supports 18 according to vertical arrows 27, the window panel being still hold by means of the suction cups of the handling device. Preferably, the window panel is lowered, or the clamp 22 is raised, in such a manner that the inside 4 of the window panel 3 is brought substantially simultaneously over the entire length of the double sided adhesive tape 2 into engagement with this tape. In this way, the correct position of the window panel with respect to the adhesive tape is easier to maintain.

In order to adhere the seal and the window panel strongly to one another by means of the pressure sensitive adhesive tape, the window panel 3 and the base portion 7 of the edge seal 1 are pressed with a predetermined pressure onto one another. For a seal arranged along the lower edge of a windshield of a car, this pressure may be in the order of magnitude of 300 kg over the entire length of the seal. In the example illustrated in the drawings, this pressure is achieved by means of a third jaw 28 of the clamp 22 which is lowered onto the outside surface 5 of the window panel 3 according to arrow 29 as illustrated in Figures 2e and 7. In order to prevent damaging of the window panel, a soft seal 32, in particular a silicone seal, is preferably provided on the bottom side of the third jaw 28.

Once the seal is strongly adhered to the window panel by means of the double sided adhesive tape, the clamp 22 is opened according to arrows 29 and 30 and the clamp 22 is removed from the encapsulated window panel according to arrow 31. The window panel is then ready for being glued into a window opening of an automotive vehicle by means of glue applied next to the seal onto the inside surface of the window panel and/or on the seal itself.

From the above description of a particular embodiment of the method according to the invention it will be clear that the present invention is not limited to this embodiment and that many modifications can be applied thereto without departing from the scope of the annexed claims.

The method according to the invention can first of all be applied to edge seals showing all kinds of different designs and made of all kinds of different materials.

## Claims

1. A method for adhering an edge seal to an edge of a window panel, in particular an automotive vehicle's window panel, which edge has a predetermined contour and which window panel has an inside and an outside surface, the edge seal comprising at least a base portion, which has a top surface arranged to be adhered along said edge to the inside surface of the window panel, and a gap filling portion which is at least partially resiliently compressible, which projects above the top surface of the base portion and which shows a further top surface, in which method the base portion of the seal is adhered by means of a double sided pressure sensitive adhesive tape applied on said top surface to the inside surface of the window panel with the gap filling portion kept in engagement with the lateral side of the edge of the window panel, **characterised in that** for adhering the edge seal to the window panel, the seal is immobilised according to said predetermined contour on a first jaw of a clamp, the edge of the window panel and the gap filling portion of the seal are then brought into lateral engagement with one another so that the gap filling portion is at least partially deformed, a predetermined clearance being maintained between the inside surface of the window panel and the double sided pressure sensitive adhesive tape applied onto the top surface of said base portion when bringing the edge of the window panel and the gap filling portion of the seal into lateral engagement with one another, the inside surface of the window panel and the double sided pressure sensitive adhesive tape are subsequently brought into engagement with one another according to a movement direction substantially perpendicular to the top surface of the base portion, and the window panel and the base portion of the edge seal are pressed with a predetermined pressure onto one another.

2. A method according to claim 1, **characterised in that** the edge of the window panel and the gap filling portion of the seal are brought into lateral engagement with one another according to a movement direction which is substantially parallel to the top surface of the base portion.

3. A method according to claim 1 or 2, **characterised in that** when bringing the edge of the window panel and the gap filling portion of the seal into lateral engagement with one another a clearance of at least 0.5 mm, preferably of at least 1 mm, is maintained between the inside surface of the window panel and the double sided pressure sensitive adhesive tape applied onto the top surface of the base portion.

4. A method according to any one of the claims 1 to 3, **characterised in that** when bringing the edge of the window panel and the gap filling portion of the seal into lateral engagement with one another, the gap filling portion is compressed less than 1.5 mm, preferably less than 1 mm.

5. A method according to any one of the claims 1 to 4, **characterised in that** the edge seal is made at least of a first material and of a second material which is softer than the first material, the gap filling portion of the edge seal having a structural portion made of the first material and a sealing portion made of the second material and arranged to abut against the edge of the window panel, the structural portion of the gap filling portion being used to stop the mutual movement of the window panel and the edge seal when bringing the edge of the window panel and the gap filling portion of the seal into lateral engagement with one another.

6. A method according to any one of the claims 1 to 5, **characterised in that** the edge seal is immobilised by immobilising means partially in a recess on the first jaw of the clamp, which immobilising means engage the edge seal at least in one location situated above the plane defined by the inside surface of the window panel when this panel is adhered to the double sided adhesive tape.

7. A method according to any one of the claims 1 to 6, **characterised in that** the edge seal is immobilised by means of a number of second jaws of the clamp which are arranged next to one another along the edge seal applied onto the first jaw and which are moved one after the other with respect to the first jaw to progressively immobilise the edge seal.

8. A method according to any one of the claims 1 to 7, **characterised in that** the edge seal is immobilised substantially over its entire length onto the first jaw.

9. A method according to any one of the claims 1 to 8, **characterised in that** the window panel and the base portion of the edge seal are pressed with a predetermined pressure onto one another by means of a third jaw of the clamp, which third jaw is moved with respect to the first jaw and abuts the window panel by means of a soft seal, in particular a silicone seal, arranged onto the third jaw.

10. A method according to any one of the claims 1 to 9, **characterised in that** said predetermined contour of the edge of the window panel differs only with predetermined part tolerances from a nominal contour, and the edge of the window panel and the gap filling portion of the seal are brought in such a manner into lateral engagement with one another that this gap filling portion is, except for said part tolerances, substantially uniformly deformed.

11. A method according to any one of the claims 1 to 10, **characterised in that** the edge of the window panel and the gap filling portion of the seal are brought substantially simultaneously over the entire length of the gap filling portion into lateral engagement with one another.

12. A method according to any one of the claims 1 to 11, **characterised in that** the inside surface of the window panel and the double sided pressure sensitive adhesive tape are brought substantially simultaneously over the entire length of the double sided pressure sensitive adhesive tape into engagement with one another.

13. A method according to any one of the claims 1 to 12, **characterised in that** the edge seal is adhered by means of the double sided adhesive tape to the inside surface of the window panel with the top surface of the gap filling portion substantially flush with the outside surface of the window panel.
